# EUROPÄISCHE PATENTSCHRIFT

(11) **EP 2 038 562 B1**
(45) Veröffentlichungstag und Bekanntmachung des Hinweises auf die Patenterteilung: **28.04.2010**
(21) Anmeldenummer: 07786926.1
(22) Anmeldetag: 29.06.2007
(51) Int. Cl.: F16D 13/72

(54) **LAMELLENKUPPLUNG ODER LAMELLENBREMSE MIT MEHRTEILIGEM LAMELLENTRÄGER**
DISK CLUTCH OR MULTIPLE DISK BRAKE COMPRISING A MULT-PART DISK CARRIER
EMBRAYAGE À DISQUES OU FREIN MULTIDISQUE COMPORTANT UN PORTE DISQUES EN PLUSIEURS ÉLÉMENTS

(30) Priorität: 10.07.2006 DE 102006031786
(43) Veröffentlichungstag der Anmeldung: 25.03.2009
(73) Patentinhaber: ZF Friedrichshafen AG, 88038 Friedrichshafen (DE)
(72) Erfinder: ILLERHAUS, Dietmar, 88131 Lindau (DE); OBERGASSER, Michael, 88045 Friedrichshafen (DE)
(86) Internationale Anmeldenummer: PCT/EP2007/056552
(87) Internationale Veröffentlichungsnummer: WO 2008/006711

(56) Entgegenhaltungen:
- DE-A1- 2 802 676
- FR-A- 2 557 941
- US-A- 4 971 184

## Beschreibung

Die Erfindung betrifft eine Lamellenkupplung oder Lamellenbremse, mit einem Innenlamellen tragenden Innenlamellenträger und einen Außenlamellen tragenden Außenlamellenträger, bei der die Innenlamellen und die Außenlamellen axial wechselweise nebeneinander angeordnet sind, und bei welcher der Innenlamellenträger und/oder der Außenlamellenträger wenigstens eine radiale Bohrung zum Durchtritt eines Kühlfluids in Richtung zu den Lamellen aufweist.

Derartige Lamellenkupplungen oder Lamellenbremsen sind in verschiedenen Ausführungsformen bekannt. Sie werden beispielsweise als Schaltelemente in Automatgetrieben für Kraftfahrzeuge genutzt. Bei einer Ausbildung als nasslaufende Lamellenkupplung ist diese als Anfahrkupplung in einem Kraftfahrzeuggetriebe oder auch außerhalb eines solchen angeordnet. Nasslaufende Anfahrkupplungen werden üblicherweise mittels eines Kühlöls von radial innen gekühlt, da durch die Rotation der Eingansseite bzw. der Ausgangsseite der Kupplung dieses Kühlöl radial nach außen geschleudert und somit eine Förderwirkung für das in der Kupplung erwärmte Kühlöl erreicht wird.

Bei einer nasslaufenden Lamellenbremse, die beispielsweise als Schaltglied in einem Stufenautomatgetriebe verwendet wird, ist diese radiale Förderung des Kühlöls nicht oder nur sehr schlecht möglich, da bei einem Schließen der Bremse ein drehendes Bremsenbauteil gegen ein stehendes Bremsenbauteil unter Energieaufnahme zum Stillstand gebracht wird. Derartige Bremsen werden daher üblicherweise entweder vollständig im Kühlöl eingetaucht betrieben, oder aber über ein Druckgefälle gezielt mit Kühlöl versorgt.

Eine konventionelle nasslaufende Lamellenkupplung ist beispielsweise aus der DE 41 36 040 C1 bekannt, bei der die Kühlölzufuhr zu den Kupplungslamellen von radial innen nach radial außen erfolgt. Dazu sind in einem Innenlamellenträger im Bereich unterhalb der Reibbeläge der Kupplungslamellen radiale Öffnungen ausgebildet, durch die das Kühlöl gezielt zu denselben leitbar ist. Um eine optimale Kühlwirkung zu erreichen sind relativ viele radiale Öffnungen bzw. Bohrungen im Lamellenträger vorzusehen, welches vergleichsweise hohe Herstellkosten verursacht und die mechanische Stabilität des Lamellenträgers negativ beeinträchtigen kann.

Außerdem offenbart die US 6,202,814 B1 eine Lamellenbremse in einem Automatgetriebe, bei der über einen radial oberhalb des Lamellenpaketes ausgebildeten Ringkanal von außen nach innen ein Kühlöl zu dem Lamellen führbar ist, wobei die Kühlölzufuhr unter Druck erfolgt und über ein separates Ventil steuerbar ist. Bei dieser Lamellenbremse weist der gehäusefeste, einteilige Lamellenträger radiale Bohrungen auf, durch die Kühlöl von dem Ringkanal zu den Lamellen führbar ist.

Um die Lamellen ausreichend zu kühlen, ist eine technische Lösung in US 4971184 offenbart und auch die in Fig. 2 dargestellte technische Lösung bekannt geworden. Dabei ist ein Innenlamellenträger 1 einer Lamellenkupplung als eine Nabe 2 ausgebildet, an deren radialen Außenseite in üblicher Weise Mitnahmeverzahnungen 3 zur drehfesten Halterung der hier nicht dargestellten Innenlamellen angeordnet sind. Durch einen axialen Ölzuführungskanal 4 ist dem Innenlamellenträger 1 ein Kühlöl zuführbar, welches im weiteren Verlauf durch mehrere radiale Bohrungen 5, 6, 7, 8 in Richtung zu den Mitnahmeverzahnungen 3 bzw. zu den Kupplungslamellen leitbar ist. Zur Erzielung einer besonders guten Kühlwirkung sowie zur Reduzierung der Anzahl der radialen Bohrungen, einhergehend mit einer erhöhten mechanischen Integrität des Innenlamellenträgers 1, sind die Bohrungen 5, 6, 7 und 8 mehr oder weniger radial schräg in dem Innenlamellenträger 1 ausgebildet. Dies ist hinsichtlich der Herstellkosten aber nicht besonders vorteilhaft, da diese Öffnungen 5, 6, 7 und 8 im Innenlamellenträger 1 nicht durch kostengünstigere Stanzvorgänge herstellbar sind.

Der Erfindung liegt die Aufgabe zugrunde, eine nasslaufende Lamellenkupplung oder Lamellenbremse so weiterzubilden, dass diese eine gute Kühlwirkung aufweist sowie kostengünstiger als bekannte Lamellenkupplungen oder Lamellenbremsen und mit vergleichbaren Kühleigenschaften herstellbar ist.

Die Lösung dieser Aufgabe ergibt sich aus den Merkmalen des Hauptanspruchs, während vorteilhafte Ausgestaltungen oder Weiterbildungen der Erfindung in den Unteransprüchen definiert sind.

Der Erfindung liegt die Erkenntnis zugrunde dass sich eine optimale Versorgung der Lamellen mit dem Kühlfluid durch eine Vielzahl von radialen Öffnungen im Lamellenträger erreichen lässt. Diese vielen radialen Öffnungen im Lamellenträger können aber dessen mechanische Stabilität beeinträchtigen. Sofern die vielen radialen Öffnungen im Lamellenträger durch vergleichsweise wenige, mehr oder weniger schräg ausgerichtete Bohrungen im Lamellenträger ersetzt werden, so sind dazu fertigungstechnisch aufwendige und daher kostenintensive Bohrvorgänge am Lamellenträger durch zuführen. Ein mehrteiligen Lamellenträger mit einem Basisteil und einem koaxial daran befestigtem zweiten Bauteil kann diesen Konflikt lösen.

Daher geht die Erfindung aus von einer Lamellenkupplung oder einer Lamellenbremse, mit einem Innenlamellen tragenden Innenlamellenträger und einen Außenlamellen tragenden Außenlamellenträger, bei der die Innenlamellen und die Außenlamellen axial wechselweise nebeneinander angeordnet sind, und bei welcher der Innenlamellenträger und/oder der Außenlamellenträger wenigstens eine radiale Öffnung zum Durchtritt eines Kühlfluids in Richtung zu den Lamellen aufweist. Diese Lamellenkupplung oder Lamellenbremse ist zudem dadurch gekennzeichnet, dass der Innenlamellenträger und/oder der Außenlamellenträger mehrteilig aufgebaut ist, mit einem Basisbauteil und mit einem an diesem Basisbauteil befestigten, das Basisbauteil zumindest teilweise axial und radial umgreifenden Verzahnungsbauteil, an welchem die Innenlamellen oder die Außenlamellen drehfest und axial verschiebbar befestigbar sind, und dass in dem Basisbauteil sowie in dem Verzahnungsbauteil radiale Öffnungen ausgebildet sind, die untereinander in Strömungsverbindung sind.

Durch diesen Aufbau ist es möglich, in ein mechanisch stabileres Basisbauteil einige wenige radiale Durchtrittsöffnungen für das Kühlfluid mit vergleichsweise großem Durchmesser auszubilden, und in dem Verzahnungsbauteil gezielt vergleichsweise viele, bevorzugt durchmesserkleinere Öffnungen für den Kühlfluiddurchtritt in Richtung zu dem Lamellen vorzusehen. Bei beiden Bauteilen des Lamellenträgers können die genannten Öffnungen durch einfache Stanzvorgänge oder radial gerade ausgerichtete Bohrungen ausgebildet werden.

In Ausgestaltung dieser erfindungsgemäßen Lamellenkupplung oder Lamellenbremse ist weiter vorgesehen, dass das Basisbauteil einen axialen Fluidversorgungskanal aufweist, welcher mit der wenigstens einen radialen Öffnung des Basisbauteils in Strömungsverbindung ist.

Das Verzahnungsbauteil ist bevorzugt weitgehend hohlzylindrisch ausgebildet und stoffschlüssig und/oder formschlüssig mit dem Basisbauteil verbunden. Außerdem weist das Verzahnungsbauteil Mitnahmeverzahnungen zur Aufnahme der Lamellen auf.

Gemäß einem weiteren Merkmal sind an dem Verzahnungsbauteil radial in Richtung zu dem Basisbauteil weisende und jeweils axial zueinander beabstandete Ausstellungen ausgebildet, die das Basisbauteil und das Verzahnungsbauteil unter Bildung eines Ringraumes auf Abstand halten. Alternativ dazu können zwischen dem Basisbauteil und dem Verzahnungsbauteil im Bereich derer axialer Enden auch Abstandringe oder Dichtringe angeordnet sein, zwischen denen der genannte Ringraum gebildet ist.

Der Ringraum steht mit der wenigstens einen radialen Öffnung des Basisbauteils in Strömungsverbindung, so dass dieser als zylindrischer Verteilungsraum mit dem Kühlfluid befüllbar ist. Von dort gelangt das Kühlfluid durch die radialen Öffnungen im Verzahnungsbauteil zu den Lamellen der Lamellenkupplung bzw. der Lamellenbremse. Die Öffnungen im Verzahnungsbauteil sind an demselben vorzugsweise gleichmäßig umfangsverteilt und axial verteilt angeordnet.

Zur mechanischen Verbindung von Basisbauteil und Verzahnungsbauteil kann zudem vorgesehen sein, dass das Verzahnungsbauteil an zumindest einem seiner beiden axialen Enden eine radiale Umbördelung oder einen radial angestellten Kragen aufweist, mit dem dieses in jeweils einer stirnseitigen Ringnut des Basisbauteils festgeklemmt und/oder durch Schweißung beziehungsweise durch Verklebung befestigt ist.

Als letztes Merkmal einer erfindungsgemäß ausgebildeten Lamellenkupplung oder Lamellenbremse ist bevorzugt vorgesehen, dass die Anzahl der Öffnungen im Basisbauteil kleiner ist als die Anzahl der Öffnungen im Verzahnungsbauteil, und dass der Durchmesser der Öffnungen im Basisbauteil größer ist als der Durchmesser der Öffnungen im Verzahnungsbauteil. Durch diese Bauweise wird bei großer mechanischer Stabilität des Lamellenträger eine sehr gute Durchströmbarkeit desselben von dem Kühlfluid ermöglicht.

Zur Verdeutlichung der Erfindung ist der Beschreibung eine Zeichnung beigefügt, die auch ein Ausführungsbeispiel zeigt. In dieser zeigt:
- Fig. 1: einen schematischen Längsschnitt durch einen erfindungsgemäß ausgebildeten Innenlamellenträger einer Lamellenkupplung und
- Fig. 2: eine Darstellung wie in Fig. 1, jedoch an einem Innenlamellenträger gemäß dem Stand der Technik.

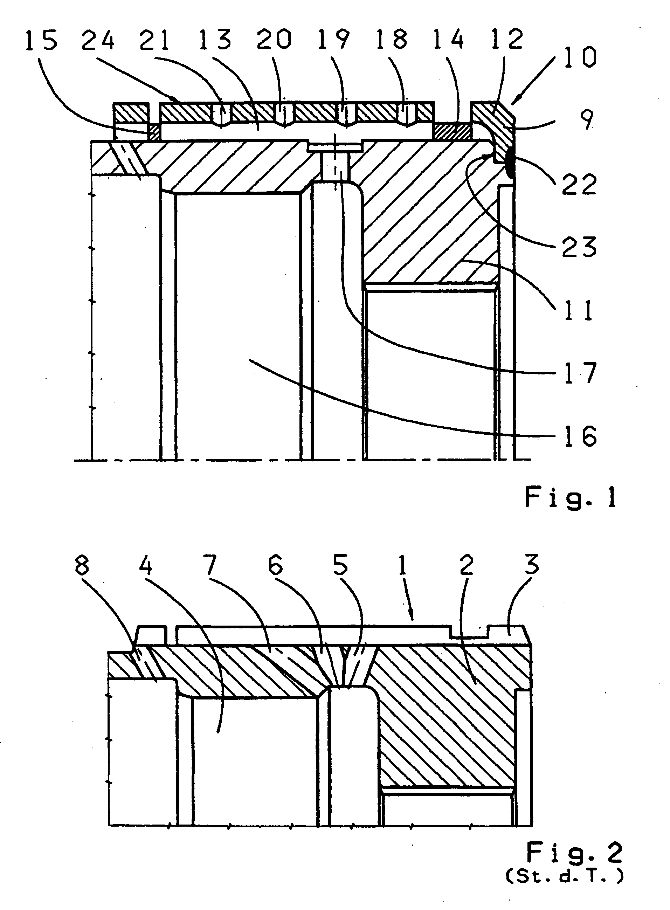

Abweichend von der eingangs schon erläuterten Konstruktion eines bekannten Innenlamellenträgers 1 gemäß Fig. 2 ist der erfindungsgemäße Lamellenträger 10 gemäß Fig. 2 aus zumindest zwei Bauteilen aufgebaut. Diese bestehen aus einem als Nabe 2 der Lamellenkupplung 10 fungierenden metallischen Basisbauteil 11 und einem aus einem Blech geformten Verzahnungsbauteil 12, die koaxial ineinander gesetzt sind. Dabei umgreift das Verzahnungsbauteil 12 das Basisbauteil 11 sowohl axial als auch radial. Das Verzahnungsbauteil 12 dient mit seiner Mitnahmeverzahnung 24 unter anderem zur Aufnahme der hier nicht dargestellten Lamellen der Lamellenkupplung 10, die in an sich bekannter Bauweise entweder als Blechlamellen oder als Belaglamellen ausgebildet sein können.

Das Verzahnungsbauteil 12 weist zudem zumindest im Bereich seiner axialen Enden Ausstellungen 14 und 15 auf, die in Richtung zu dem Basisbauteil 11 radial hervorstehen und daher das Verzahnungsbauteil 12 sowie das Basisbauteil 11 zueinander auf Abstand halten.

Derartige Ausstellungen können in einer dazu alternativen Variante, in Richtung zu dem Verzahnungsbauteil 12 weisend, aber auch an dem Basisbauteil 11 ausgebildet sein. Die gleiche Funktion können aber auch zwischen dem Basisbauteil 11 und dem Verzahnungsbauteil 12 eingesetzte metallische Sicherungsringe und/oder Dichtungsringe aus einem Elastomer-Werkstoff wahrnehmen.

Zwischen den beiden radialen Ausstellungen 14 und 15 sowie dem Basisbauteil 11 und dem Verzahnungsbauteil 12 ist dadurch ein Ringraum 13 gebildet. Dieser Ringraum 13 steht nun über zumindest eine radiale Öffnung 17 in dem Basisbauteil 11 mit einem axialen Fluidversorgungskanal 16 in dem Innenlamellenträger 10 in Strömungsverbindung, so dass der Ringraum 13 von dort mit dem Kühlfluid versorgbar ist. Von dem Ringraum 13 gelangt das Kühlfluid über radiale Öffnungen 18, 19, 20, 21 in dem Verzahnungsbauteil 12 zu den hier nicht dargestellten Innenlamellen des Innenlamellenträgers 10.

Fig. 1 zeigt deutlich, dass in dem Basisbauteil 11, im Vergleich zu dem Verzahnungsbauteil 12, nur relative wenige radiale Öffnungen 17 bzw. Bohrungen zur Weiterleitung von Kühlfluid vorhanden sind. Um dennoch eine gute Versorgung des Ringraumes 13 gewährleisten zu können, haben diese Öffnunggen 17 im Vergleich zu den radialen Öffnungen 18, 19, 20, 21 in dem Verzahnungsbauteil 12 einen größeren Durchmesser.

Da das Verzahnungsbauteil 12 zur Weiterleitung eines von den Lamellen der Lamellenkupplung 10 zu übertragenden Drehmomentes dient, ist dieses Bauteil 12 abschersicher mit dem Basisbauteil 11 verbunden. Diese Befestigung kann auf verschiede Weise realisiert sein. Bei dem Ausführungsbeispiel gemäß Fig. 1 weist das Basisbauteil 11 dazu eine stirnseitige Ringnut 23 auf, in der ein radial nach innen weisender Kragen 9 des Verzahnungsbauteils 12 mittels einer Schweißung 22 festgelegt ist. Eine drehfeste Verbindung zwischen dem Basisbauteil 11 und dem Verzahnungsbauteil 12 ist vorzugsweise auch an deren anderem axialen Ende vorzusehen.

### Bezugszeichen

- 1: Innenlamellenträger
- 2: Nabe
- 3: Mitnahmeverzahnung
- 4: axialer Ölversorgungskanal in der Nabe
- 5: radiale Bohrung in der Nabe
- 6: radiale Bohrung in der Nabe
- 7: radiale Bohrung in der Nabe
- 8: radiale Bohrung in der Nabe
- 9: radialer Kragen am Verzahnungsbauteil
- 10: Innenlamellenträger
- 11: Basisbauteil; Nabe
- 12: Verzahnungsbauteil
- 13: Ringraum
- 14: Ausstellung: Dichtring
- 15: Ausstellung; Dichtring
- 16: axialer Fluidversorgungskanal in der Nabe
- 17: radiale Öffnung im Basisbauteil
- 18: radiale Öffnung im Verzahnungsbauteil
- 19: radiale Öffnung im Verzahnungsbauteil
- 20: radiale Öffnung im Verzahnungsbauteil
- 21: radiale Öffnung im Verzahnungsbauteil
- 22: Schweißung
- 23: stirnseitige Ringnut im Basisbauteil
- 24: Mitnahmeverzahnung

## Patentansprüche

1. Lamellenkupplung oder Lamellenbremse, mit einem Innenlamellen tragenden Innenlamellenträger und einen Außenlamellen tragenden Außenlamellenträger, bei der die Innenlamellen und die Außenlamellen axial wechselweise nebeneinander angeordnet sind, und bei welcher der Innenlamellenträger und/oder der Außenlamellenträger wenigstens eine radiale Öffnung zum Durchtritt eines Kühlfluids in Richtung zu den Lamellen aufweist, **dadurch gekennzeichnet, dass** der Innenlamellenträger (10) und/oder der Außenlamellenträger mehrteilig aufgebaut ist, mit einem Basisbauteil (11) und mit einem an diesem Basisbauteil (11) befestigten, das Basisbauteil (11) zumindest teilweise axial und radial umgreifenden Verzahnungsbauteil (12), an welchem die Innenlamellen oder die Außenlamellen drehfest und axial verschiebbar befestigbar sind, und dass in dem Basisbauteil (11) sowie in dem Verzahnungsbauteil (12) radiale Öffnungen (17; 18, 19, 20, 21) ausgebildet sind, die untereinander in Strömungsverbindung sind, wobei das Verzahnungsbauteil (12) hohlzylindrisch ausgebildet und zur Weiterleitung eines zu übertragenden Drehmoments stoffschlüssig und/oder formschlüssig mit dem Basisbauteil (11 ) verbunden ist.

2. Lamellenkupplung oder Lamellenbremse nach Anspruch 1, **dadurch gekennzeichnet, dass** das Basisbauteil (11) einen axialen Fluidversorgungskanal (16) aufweist, der mit der wenigstens einen radialen Öffnung (17) des Basisbauteil (11) in Strömungsverbindung ist.

3. Lamellenkupplung oder Lamellenbremse nach Anspruch 1 oder 2, **dadurch gekennzeichnet, dass** das Verzahnungsbauteil (12) weitgehend hohlzylindrisch ausgebildet und stoffschlüssig und/oder formschlüssig mit dem Basisbauteil (11) verbunden ist, und dass das Verzahnungsbauteil (12) radial in Richtung zu dem Basisbauteil (11) weisende sowie axial beabstandete Ausstellungen (14, 15) aufweist, die das Basisbauteil (11) und das Verzahnungsbauteil (12) unter Bildung eines Ringraumes (13) auf Abstand halten.

4. Lamellenkupplung oder Lamellenbremse nach Anspruch 3, **dadurch gekennzeichnet, dass** der Ringraum (13) mit der wenigstens einen radialen Öffnung (17) des Basisbauteil (11) in Strömungsverbindung ist.

5. Lamellenkupplung oder Lamellenbremse nach zumindest einem der Ansprüche 1 bis 4, **dadurch gekennzeichnet, dass** die radialen Öffnungen (18, 19, 20, 21) des Verzahnungsbauteils (12) an demselben umfangsverteilt und axial verteilt sind, durch die das Kühlfluid zu dem Lamellen gelangen kann.

6. Lamellenkupplung oder Lamellenbremse nach zumindest einem der Ansprüche 1 bis 5, **dadurch gekennzeichnet, dass** das Verzahnungsbauteil (12) zumindest einen radial angestellten Kragen (9) oder eine stimseitige Umbördelung aufweist, mit dem dieses in einer stirnseitigen Ringnut (23) des Basisbauteils (11) festgeklemmt oder durch Schweißung (22) beziehungsweise durch Verklebung befestigt ist.

7. Lamellenkupplung oder Lamellenbremse nach zumindest einem der Ansprüche 1 bis 6, **dadurch gekennzeichnet, dass** die Anzahlder Öffnungen (17) im Basisbauteil (11) kleiner ist als die Anzahl der Öffnungen (18,19, 20, 21) im Verzahnungsbauteil (12), und dass der Durchmesser der Öffnungen (17) im Basisbauteil (11) größer ist als der Durchmesser der Öffnungen (18, 19, 20, 21) im Verzahnungsbauteil (12).

## Claims

1. Multiplate clutch or multiplate brake, having an inner plate carrier which bears inner plates and an outer plate carrier which bears outer plates, in which multiplate clutch or multiplate brake the inner plates and the outer plates are arranged axially adjacent to one another in an alternating fashion, and in which multiplate clutch or multiplate brake the inner plate carrier and/or the outer plate carrier has at least one radial opening for the passage of a cooling fluid in the direction of the plates, **characterized in that** the inner plate carrier (10) and/or the outer plate carrier is of multi-part construction, having a base component (11) and having a toothing component (12) which is fastened to said base component (11) and which engages at least partially axially and radially around the base component (11) and to which the inner plates or the outer plates can be fastened in a rotationally fixed and axially movable manner, and **in that** radial openings (17; 18, 19, 20, 21) are formed in the base component (11) and in the toothing component (12), which radial openings (17; 18, 19, 20, 21) are flow-connected to one another, with the toothing component (12) being of hollow cylindrical design and being connected in a cohesive and/or positively locking manner to the base component (11) in order to transmit a torque to be transmitted.

2. Multiplate clutch or multiplate brake according to Claim 1, **characterized in that** the base component (11) has an axial fluid supply duct (16) which is flow-connected to the at least one radial opening (17) of the base component (11).

3. Multiplate clutch or multiplate brake according to Claim 1 or 2, **characterized in that** the toothing component (12) is of substantially hollow cylindrical design and is connected in a cohesive and/or positively locking manner to the base component (11), and **in that** the toothing component (12) has protuberances (14, 15) which point radially in the direction of the base component (11) and which are spaced apart axially and which keep the base component (11) and the toothing component (12) spaced apart so as to form an annular chamber (13).

4. Multiplate clutch or multiplate brake according to Claim 3, **characterized in that** the annular chamber (13) is flow-connected to the at least one radial opening (17) of the base component (11).

5. Multiplate clutch or multiplate brake according to at least one of Claims 1 to 4, **characterized in that** the radial openings (18, 19, 20, 21) of the toothing component (12) are distributed circumferentially and axially on said toothing component (12), through which radial openings (18, 19, 20, 21) the cooling fluid can pass to the plates.

6. Multiplate clutch or multiplate brake according to at least one of Claims 1 to 5, **characterized in that** the toothing component (12) has at least one radially aligned collar (9) or an end-side flanged portion, by means of which said toothing component (12) is fixedly clamped, or fastened by means of a weld (22) or by means of an adhesive bond, in an end-side annular groove (23) of the base component (11).

7. Multiplate clutch or multiplate brake according to at least one of Claims 1 to 6, **characterized in that** the number of openings (17) in the base component (11) is smaller than the number of openings (18, 19, 20, 21) in the toothing component (12), and **in that** the diameter of the openings (17) in the base component (11) is greater than the diameter of the openings (18, 19, 20, 21) in the toothing component (12).

## Revendications

1. Embrayage multidisques ou frein multidisques, comprenant un support de disques intérieurs portant des disques intérieurs et un support de disques extérieurs portant des disques extérieurs, dans lequel les disques intérieurs et les disques extérieurs sont disposés les uns à côté des autres de manière remplaçable axialement, et dans lequel le support de disques intérieurs et/ou le support de disques extérieurs présentent au moins une ouverture radiale pour le passage d'un fluide de refroidissement dans la direction des disques, **caractérisé en ce que** le support de disques intérieurs (10) et/ou le support de disques extérieurs sont réalisés en plusieurs parties, avec un composant de base (11) et avec un composant de denture (12) fixé à ce composant de base (11) et venant en prise au moins partiellement axialement et radialement autour du composant de base (11), sur lequel les disques intérieurs ou les disques extérieurs peuvent être fixés de manière solidaire en rotation et déplaçable axialement, et **en ce que** dans le composant de base (11) ainsi que dans le composant de denture (12) sont réalisées des ouvertures radiales (17 ; 18, 19, 20, 21), qui sont disposées en liaison d'écoulement les unes par rapport aux autres, le composant de denture (12) étant réalisé sous forme cylindrique creuse et, pour le transfert d'un couple à transférer, étant connecté par engagement par liaison de matière et/ou par engagement par coopération de forme au composant de base (11).

2. Embrayage multidisques ou frein multidisques selon la revendication 1, **caractérisé en ce que** le composant de base (11) présente un canal axial d'alimentation en fluide (16), qui est en liaison d'écoulement avec l'au moins une ouverture radiale (17) du composant de base (11).

3. Embrayage multidisques ou frein multidisques selon la revendication 1 ou 2, **caractérisé en ce que** le composant de denture (12) est réalisé essentiellement sous forme cylindrique creuse et est connecté par liaison de matière et/ou par engagement par coopération de forme au composant de base (11), et **en ce que** le composant de denture (12) présente des parties exposées (14, 15) orientées radialement dans la direction du composant de base (11) et espacées axialement, qui maintiennent à distance l'un de l'autre le composant de base (11) et le composant de denture (12) en formant un espace annulaire (13).

4. Embrayage multidisques ou frein multidisques selon la revendication 3, **caractérisé en ce que** l'espace annulaire (13) est en liaison d'écoulement avec l'au moins une ouverture radiale (17) du composant de base (11).

5. Embrayage multidisques ou frein multidisques selon au moins l'une quelconque des revendications 1 à 4, **caractérisé en ce que** les ouvertures radiales (18, 19, 20, 21) du composant de denture (12) sont réparties axialement et sur la périphérie sur ledit composant de denture, le fluide de refroidissement pouvant parvenir à travers ces ouvertures jusqu'aux disques.

6. Embrayage multidisques ou frein multidisques selon au moins l'une quelconque des revendications 1 à 5, **caractérisé en ce que** le composant de denture (12) présente au moins un col incliné radialement (9) ou une bordure frontale, avec lequel ou laquelle celui-ci est serré fixement dans une rainure annulaire frontale (23) du composant de base (11) ou est fixé par soudage (22) respectivement par collage.

7. Embrayage multidisques ou frein multidisques selon au moins l'une quelconque des revendications 1 à 6, **caractérisé en ce que** le nombre des ouvertures (17) dans le composant de base (11) est inférieur au nombre des ouvertures (18, 19, 20, 21) dans le composant de denture (12), et **en ce que** le diamètre des ouvertures (17) dans le composant de base (11) est supérieur au diamètre des ouvertures (18, 19, 20, 21) dans le composant de denture (12).
